# EUROPÄISCHE PATENTSCHRIFT

(11) **EP 0 652 130 B1**
(45) Veröffentlichungstag und Bekanntmachung des Hinweises auf die Patenterteilung: **23.07.1997**
(21) Anmeldenummer: 94117246.2
(22) Anmeldetag: 02.11.1994
(51) Int. Cl.: B60L 13/00

(54) **Befestigung von Permanentmagneten auf Magnetträgern und Verfahren zu deren Ausführung**
Fastening of permanent magnets on supports and method for its achievement
Fixation d'aimants permanents sur supports et méthode pour son achèvement

(30) Priorität: 06.11.1993 DE 4337934
(43) Veröffentlichungstag der Anmeldung: 10.05.1995
(73) Patentinhaber: Magnetbahn GmbH, D-82319 Starnberg (DE)
(72) Erfinder: Ban, Giorgio, D-82131 Gauting (DE); Pechaty, Karel, Dipl.-Ing., D-82319 Starnberg (DE); Mohr, Doris, D-82377 Penzberg (DE); Pürner, Georg N., Dipl.-Ing., D-38100 Braunschweig (DE)
(74) Vertreter: Erbacher, Alfons, Dipl.-Ing.

(56) Entgegenhaltungen:
- EP-A- 0 300 125
- US-A- 3 885 504

## Beschreibung

Die vorliegende Erfindung betrifft die Befestigung von Permanentmagneten auf Magnetträgern von Fahrzeugen mit Linearmotor. Bisher wurden bei der Anmelderin die Magnete auf die Magnetträger geklebt. Diese Verklebungen hatten den Nachteil, daß sie sehr aufwendig und schwierig wegen der gegenseitigen Anziehung von Permanentmagneten und Magnetträgern und Permanentmagneten untereinander war. Aufgabe der vorliegenden Erfindung ist es daher, eine einfache Befestigungsmöglichkeit von Permanentmagneten auf Magnetträgern anzugeben. Diese Aufgabe wird durch eine Befestigung nach Anspruch 1 und ein Verfahren zur Befestigung nach Anspruch 9 gelöst. Vorteilhafte Ausgestaltungen und Weiterbildungen der Erfindung sind den Unteransprüchen zu entnehmen.

Erfindungsgemäß weisen die Permanentmagnete die Form zweier aufeinanderliegender Quader auf, wobei der obere Quader auf einem unteren Quader aufliegt, dessen Tiefe gleich dem des oberen Quaders ist und dessen Breite größer als die des oberen Quaders ist und wobei der obere Quader so aufliegt, daß die Überstände des unteren Quaders auf beiden Seiten gleich groß sind. Die erfindungsgemäßen Permanentmagnete werden von den erfindungsgemäßen Haltern gegen die Magnetträger gedrückt. Die Halter weisen eine derartige Breite auf, daß die benachbarten Magnete, zwischen denen die Halter eingesetzt sind, den richtigen Abstand zueinander einnehmen. Besonders bevorzugt ist es, die Halter so auszugestalten, daß in ihnen die Pollagewicklung zwischen den Magneten geführt wird. Weiterhin ist es besonders bevorzugt, die Länge der Halter so auszuwählen, daß für die seitlich neben den Magneten befindliche Pollagewicklung Auflageflächen gegeben sind. Weiterhin ist es besonders bevorzugt, die Pollagewicklung zwischen den Magneten mit einem Deckel für die Halter zu schützen, der vorteilhafterweise einrastbar ausgeführt ist. Für die neben den Magneten befindlichen Anteile der Pollagewicklung erfolgt der Schutz vorteilhafterweise mittels Leisten, die seitlich der Magnete die Pollagewicklung abdecken und mit einer besonders bevorzugten Ausführungsform mit Schnappverschlüssen in die Halter einrastbar sind. Erfindungsgemäß werden die Magnete folgendermaßen montiert:

Zunächst wird ein Halter auf den Magnetträger geschraubt, jedoch nicht festgezogen. Dann wird der Magnet aufgesetzt und so gegen den Halter geschoben, daß der Halter auf dem Überstand des Permanentmagneten aufliegt. Dann wird ein zweiter Halter auf den zweiten Überstand des ersten Permanentmagneten aufgelegt und festgeschraubt. Dann wird der erste Permanentmagnet gegebenenfalls ausgerichtet. Dann wird der erste Halter festgezogen. Es folgt ein zweiter Magnet und der dritte Halter. Nachdem der zweite Magnet ausgerichtet ist, wird der zweite Halter festgezogen. Diese Vorgehensweise wird sinngemäß bei den verbleibenden zu befestigenden Magneten fortgeführt. Darauf werden bei einem besonders bevorzugten Träger die Pollagewicklungen in die Träger eingelegt und bevorzugterweise mit Deckeln auf den Haltern und Leisten seitlich der Halter geschützt.

Die Erfindung wird im folgenden anhand der Figuren für ein besonders bevorzugten Beispiel näher erläutert. Es zeigen:

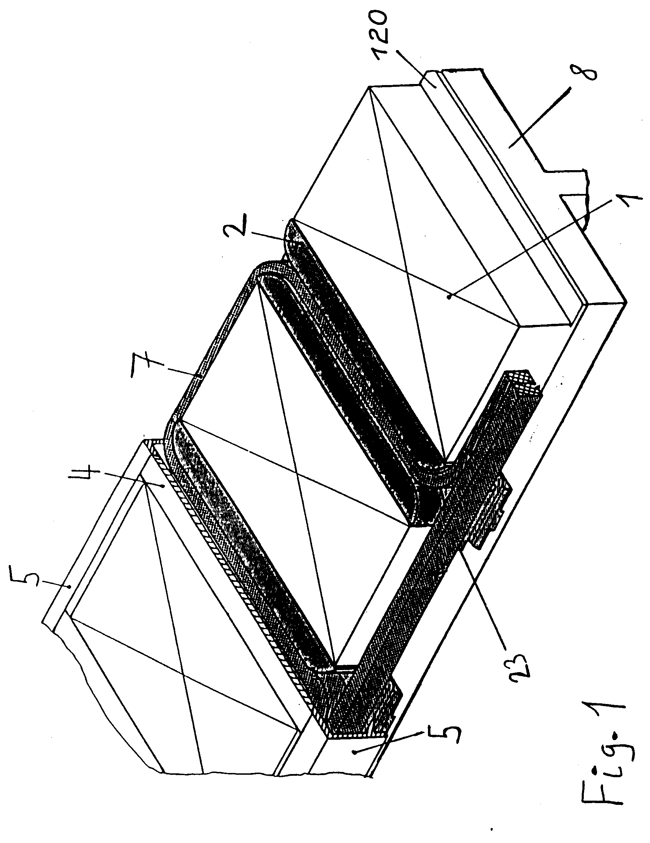

- Fig. 1: eine Aufsicht und einen Teilausschnitt auf eine besonders bevorzugte Befestigung der Magnete auf dem Magnetträger,

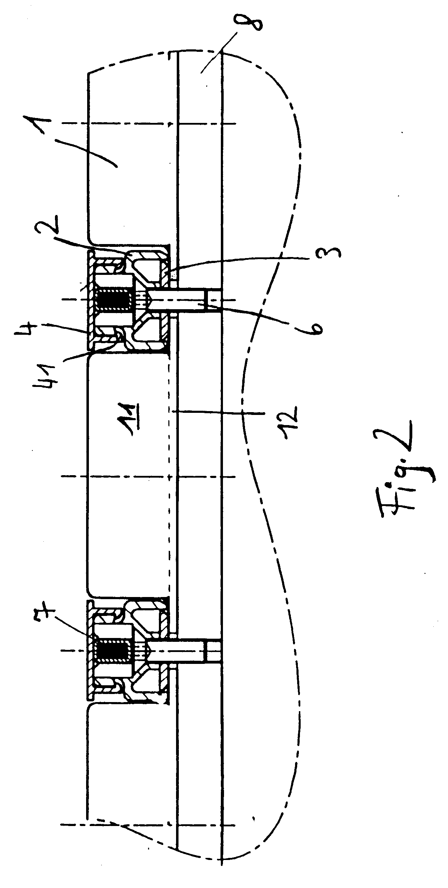

- Fig. 2: einen Längsschnitt der besonders bevorzugten Befestigung aus Fig. 1,

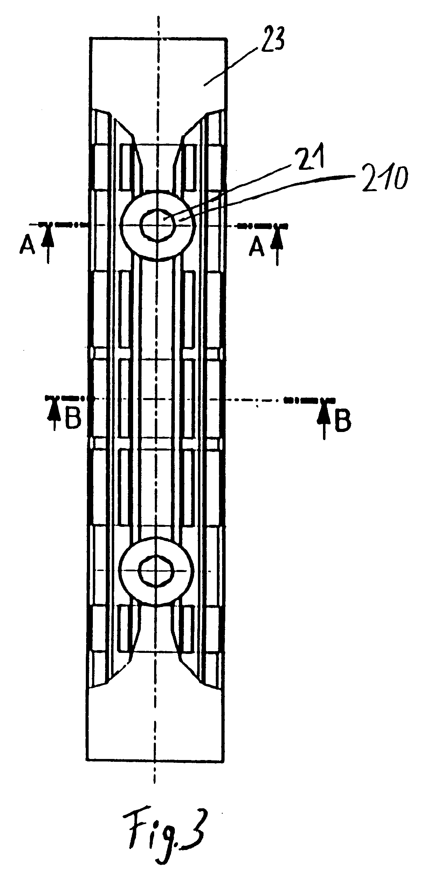

- Fig. 3: die Aufsicht auf einen besonders bevorzugten erfindungsgemäßen Halter,

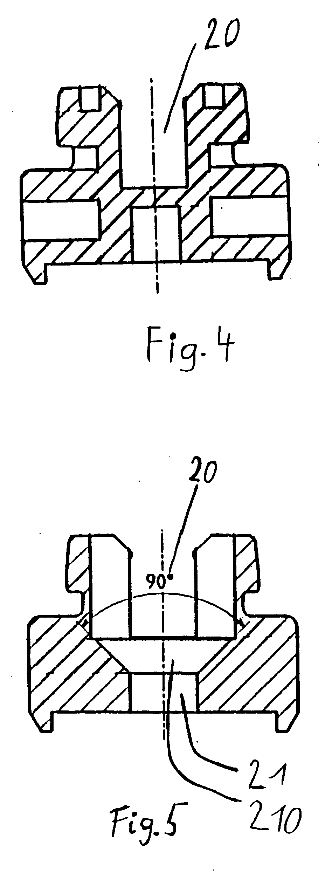

- Fig. 4: den Schnitt A-A aus Fig. 3,
- Fig. 5: den Schnitt B-B aus Fig. 3,

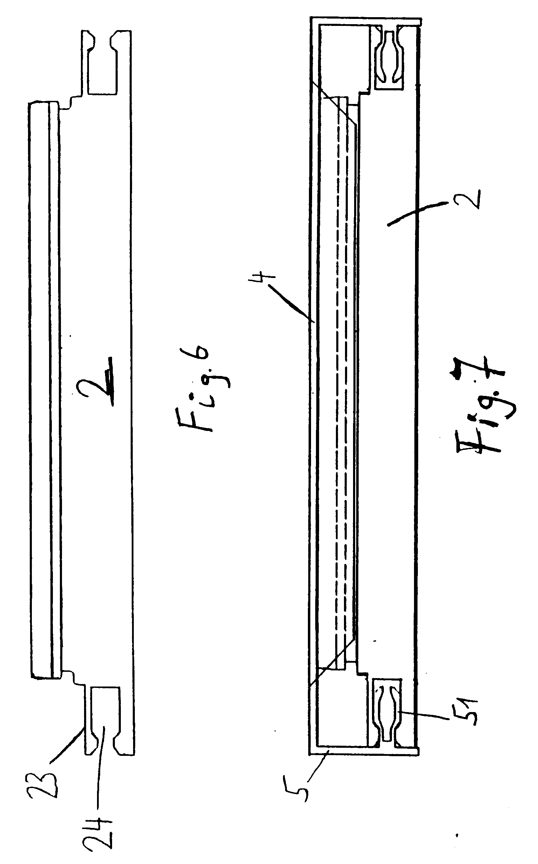

- Fig. 6: die Seitenansicht des Halters aus Fig. 3,
- Fig. 7: die Seitenansicht des Halters aus Fig. 3 mit aufgesetztem Deckel und angesetzten Leisten.

Die Permanentmagnete 1 weisen insgesamt die Form zweier aufeinanderliegender Quader auf, wobei der obere hohe Quader 11 auf dem niedrigeren Quader 12 aufliegt, dessen Tiefe gleich dem des oberen Quaders 11 ist und dessen Breite größer als die des oberen Quaders 11 ist, wobei der obere Quader 11 so aufliegt, daß die Überstände 120 an beiden Seiten gleich groß sind. Die Permanentmagnete 1 liegen auf dem Magnetträger 8 und werden von den Haltern 2 direkt und vorzugsweise auch über eine Eisenmetalleiste 3 auf den Magnetträger 8 gedrückt und so befestigt. Die Halter 2 sind über Schrauben 6 mit dem Magnetträger 8 verbunden. Die vorzugsweise auch verwendete Eisenmetalleiste 3 erhöht zum einen die Stabilität des Halters 2 und zum anderen verbessert sie den magnetischen Fluß und damit den Wirkungsgrad des Linearmotors. Die Eisenmetallleiste 3 weist bevorzugterweise in ihrer Länge die Breite der Magnetträger 8 auf. Die Halter 2 weisen bevorzugterweise zwei Bohrungen 21 mit Senkungen 210 auf, die die Schrauben 6 aufnehmen. Weiterhin weisen die Halter 2 besonders bevorzugt einen durchgehenden Einschnitt 20 zur Aufnahme der Pollagewicklung 7 zwischen den Permanentmagneten 1 auf und eine Auflage 23, die sich an beiden Enden des Halters 2 befindet und zur Auflage der Anteile der Pollagewicklung 7 dient, die sich seitlich der Permanentmagnete 1 befinden. Weiterhin werden die Halter 2 vorteilhafterweise mit einem Deckel 4 so abgedeckt, daß die in dem durchgehenden Einschnitt 20 vorhandene Pollagewicklung 7 geschützt wird. Die Deckel 4 weisen in einer besonders bevorzugten Form einen Schnappverschluß 41 auf. Die Anteile der Pollagewicklung 7, die seitlich neben den Permanentmagneten 1 verlaufen, werden in einer besonders bevorzugten Ausführungsform mit Leisten 5 abgedeckt und geschützt. Diese weisen besonders vorteilhaft einen Schnappverschluß 51 auf, der in der vorteilhafterweise im Halter 2 integrierten Aufnahme 24 eingerastet wird.

Der Halter 2 dient also als Montagehilfe bei der Montage der Permanentmagnete 1 und als Abstandhalter für die Permanentmagnete 1. Er befestigt weiterhin die Permanentmagnete 1 und führt und schützt in der vorstehend beschriebenenen besonders bevorzugten Ausführungsform die Pollagewicklung 7 in Verbindung mit dem Deckel 4 und den Leisten 5. Die Halter 2, die Deckel 4 und die Leisten 5 sind vorteilhafterweise aus einem Thermoplast hergestellt. Die Permanentmagnete 1 bestehen vorteilhafterweise aus Neodymeisen, das wegen dessen Korrosionsanfälligkeit mit einer Edelstahlhülle umgeben ist, die besonders schonend mit Laser verschweißt wird.

## Patentansprüche

1. Befestigung von Permanentmagneten (1) auf Magnetträger (8), **dadurch gekennzeichnt**,
daß jeder Permanentmagnet (1) die Form zweier aufeinanderliegender Quader aufweist, wobei der obere Quader (11) auf einem unteren Quader (12) aufliegt, dessen Tiefe gleich der des oberen Quaders (11) ist und dessen Breite größer als die des oberen Quaders (11) ist und wobei der obere Quader (11) so aufliegt, daß die Überstände (120) des unteren Quaders (12) auf beiden Seiten gleich groß sind,
daß die Permanentmagnete (1) mit den Überständen (120) auf dem Magnetträger (8) aufliegen,
daß Halter (2) auf den Überständen (120) aufliegen und mit den Magnetträgern (8) so verschraubt sind, daß sie die Permanentmagnete (1) auf die Magnetträger (8) drücken,
daß die Halter (2) eine derartige Breite aufweisen, daß der erforderliche Abstand der Permanentmagnete (1) und damit die richtige Polteilung erhalten wird.

2. Befestigung nach Anspruch 1, dadurch gekennzeichnet, daß der Halter (2) in seiner Länge durchgehend einen Einschnitt (20) aufweist, in dem eine Pollagewicklung (7) geführt wird.

3. Befestigung nach Anspruch 2, dadurch gekennzeichnet, daß der Halter (2) einen Deckel (4) aufweist zum Schutz der Pollagewicklung (7).

4. Befestigung nach einem der vorgehenden Ansprüche, dadurch gekennzeichnet, daß zwischen den Haltern (2) und den Überständen (120) der Permanentmagnete (1) eine Eisenmetalleiste (3) eingefügt ist.

5. Befestigung nach einem der vorgehenden Ansprüche, dadurch gekennzeichnet, daß die Halter (2) an beiden Enden eine Auflage (23) aufweisen zur Auflage der Anteile der Pollagewicklung (7), die sich seitlich der Permanentmagnete (1) befinden.

6. Befestigung nach Anspruch 5, dadurch gekennzeichnet, daß die Anteile der Pollagewicklung (7), die sich seitlich der Permanentmagnete (1) befinden, mit Leisten (5) abgedeckt werden.

7. Befestigung nach Anspruch 6, dadurch gekennzeichnet, daß die Leisten (5) mit Schnappverschlüssen (51) in den Aufnahmen (24) der Halter (2) befestigt sind.

8. Befestigung nach einem der vorstehenden Ansprüche, dadurch gekennzeichnet, daß der Permanentmagnet (1) aus Neodymeisen besteht, welches mit einer Hülle aus Edelstahl umgeben ist, die mit Laser verschweißt wurde.

9. Verfahren zur Befestigung von Permanentmagneten (1) nach Anspruch 1 auf Magnetträgern (8) mittels Haltern (2) nach Anspruch 1, dadurch gekennzeichnet,
daß zunächst ein Halter (2) auf den Magnetträger (8) aufgeschraubt wird,
daß dann ein Permanentmagnet (1) so gegen den Halter (2) geschoben wird, daß der Halter (2) auf dem Überstand (120) teilweise aufliegt,
daß ein zweiter Halter (2) auf den Magnetträger (8) aufgeschraubt wird, der teilweise auf dem zweiten Überstand des ersten Permanentmagneten (1) aufliegt,
daß der erste Halter (2) festgezogen wird,
daß dann ein zweiter Permanentmagnet (1) gegen den zweiten Halter (2) geschoben wird, und ein dritter Halter (2) auf den Magnetträger so aufgeschraubt wird, daß er teilweise auf dem zweiten Überstand des zweiten Permanentmagneten (1) aufliegt,
daß dann der zweite Halter (2) festgezogen wird, daß die restlichen Permanentmagnete (1) mit Haltern (2) entsprechend befestigt werden.

10. Verfahren nach Anspruch 9 zum Befestigen von Permanentmagneten (1) nach Anspruch 1 auf Magnetträgern (8) mittels Haltern (2) nach einem der Ansprüche 1 - 8, dadurch gekennzeichnet, daß nach der Befestigung der Permanentmagneten (1) mit den Haltern (2) eine Pollagewicklung (7) verlegt und diese dann mit Deckeln (4) und Leisten (5) abgedeckt wird.

## Claims

1. Fastening of permanent magnets (1) on magnet carriers (8),
characterised thereby that each permanent magnet (1) has the form of two blocks resting on one another, wherein the upper block (11) rests on a lower block (12), the depth of which is the same as that of the upper block (11) and the width of which is greater than that of the upper block (11) and wherein the upper block (11) so rests that the overhangs (120) of the lower block (12) are equally large on both sides, that the permanent magnets (1) rest by the overhangs (120) on the magnet carrier (8), that holders (2) rest on the overhangs (120) and are so screw-connected with the magnet carriers (8) that they press the permanent magnets (1) onto the magnet carriers (8), and that the holders (2) have a width of such a kind that the required spacing of the permanent magnets (1) and thus the correct pole pitch is obtained.

2. Fastening according to claim 1, characterised thereby that the holder (2) has an incision (20) which is continuous in its length and in which a pole position winding (7) is guided.

3. Fastening according to 2, characterised thereby that the holder (2) has a cover (4) for protection of the pole position winding (7).

4. Fastening according to one of the preceeding claims, characterised thereby that an iron metal strip (3) is inserted between the holders (2) and the overhangs (120) of the permanent magnets (1).

5. Fastening according to one of the preceeding claims, characterised thereby that the holder (2) has at both ends a support (23) for support of the portions of the pole position winding (7) which are disposed laterally of the permanent magnets.

6. Fastening according to claim 5, characterised thereby that the portions of the pole position winding (7) which are disposed laterally of the permanent magnets are covered by strips (5).

7. Fastening according to claim 6, characterised thereby that the strips (5) are fastened by snap closures (51) in the receptacles of the holder (2).

8. Fastening according to one of the foregoing claims, characterised thereby that the permanent magnet (1) consists of neodymium iron which is enclosed by a skin of noble metal, which was welded by laser.

9. Method for the fastening of permanent magnets (1) according to claim 1 on magnet carriers (8) by means of holders (2) according to claim 1, characterised thereby that initially a holder (2) is screwed onto the magnet carrier (8), that then a permanent magnet (1) is so pushed against the holder (2) that the holder (2) rests partly on the overhang (120), that a second holder (2) is screwed onto the magnet carrier(8) and partly rests on the second overhang of the first permanent magnet (1), that the first holder (2) is tightened, that then a second permanent magnet (1) is pushed against the second holder (2) and a third holder (2) is so screwed onto the magnet carrier that it partly rests on the second overhang of the second permanent magnet, that then the second holder (2) is tightened, and that the remaining permanent magnets (1) are correspondingly fastened by holders (2).

10. Method according to claim 9 for fastening of permanent magnets (1) according to claim 1 on magnet carriers (8) by means of holders (2) according to one of claims 1 to 8, characterised thereby that after the fastening of the permanent magnets (1) by the holders (2) a pole position winding (7) is laid and this is then covered by covers (4) and strips (5).

## Revendications

1. Fixation d'aimants permanents (1) sur des supports magnétiques (8), caractérisée en ce que chaque aimant permanent (1) a la forme de deux parallélépipèdes superposés, le parallélépipède supérieur (11) reposant sur un parallélépipède inférieur (12) dont la profondeur est égale à celle du parallélépipède supérieur (11) et dont la largeur est plus grande que celle du parallélépipède supérieur (11) et où le parallélépipède supérieur (11) repose de façon que les parties saillantes (120) du parallélépipède inférieur (12) soient de la même grandeur aux deux côtés,
en ce que les aimants permanents (1), avec les parties saillantes (120), reposent sur le support magnétique (8),
en ce que des organes de retenue (2) reposent sur les parties en saillie (120) et sont assemblés par vissage avec les supports magnétiques (8) de telle sorte que les aimants permanents (1) exercent une pression sur les supports magnétiques (8),
en ce que les organes de retenue (2) ont une largeur conçue pour atteindre l'écart requis des aimants permanents (1) et par conséquent le bon écartement polaire.

2. Fixation selon la revendication 1, caractérisée en ce que l'organe de retenue (2) présente, sur sa longueur, une entaille (20) continue dans laquelle est guidé un enroulement des pôles (7).

3. Fixation selon la revendication 2, caractérisée en ce que l'organe de retenue (2) présente un couvercle (4) pour protéger l'enroulement des pôles (7).

4. Fixation selon l'une des revendications précédentes, caractérisée en ce qu'il est insérée, entre les organes de retenue (2) et les parties saillantes (120) des aimants permanents (1), une baguette métallique en fer (3).

5. Fixation selon l'une des revendications précédentes, caractérisée en ce que les organes de retenue (2) présentent aux deux extrémités un support (23) pour supporter les parties de l'enroulement des pôles (7) qui se trouvent à côté des aimants permanents (1).

6. Fixation selon la revendication 5, caractérisée en ce que les parties de l'enroulement des pôles (7) qui se trouvent à côté des aimants permanents (1) sont recouvertes par des baguettes (5).

7. Fixation selon la revendication 6, caractérisée en ce que les baguettes (5) sont fixées par des fermetures à enclenchement (51) dans les logements (24) des organes de retenue (2).

8. Fixation selon l'une des revendications précédents, caractérisée en ce que l'aimant permanent (1) est réalisé en fer au néodyme qui est entouré d'une gaine en acier fin qui est soudée au laser.

9. Procédé de fixation d'aimants permanents (1) selon la revendication 1 sur des supports magnétiques (8) au moyen d'organes de retenue (2) selon la revendication 1, caractérisé en ce qu'il est vissé tout d'abord un organe de retenue (2) sur le support magnétique (8),
en ce qu'ensuite un aimant permanent (1) est poussé de telle sorte contre l'organe de retenue (2), que l'organe de retenue (2) repose partiellement sur la partie saillante (120),
en ce qu'un deuxième organe de retenue (2) est vissé sur le support magnétique (8) qui repose partiellement sur la deuxième partie saillante du premier aimant permanent (1),
en ce que le premier organe de support (2) est serré,
en ce qu'ensuite un deuxième aimant permanent (1) est poussé contre le deuxième organe de retenue (2) et qu'un troisième organe de retenue (2) est vissé sur le support magnétique de telle sorte qu'il repose partiellement sur la deuxième partie saillante du deuxième aimant permanent (1),
en ce qu'ensuite le deuxième organe de retenue (2) est serré, que les aimants permanents restants (1) sont fixés de manière correspondante par des organes de retenue (2).

10. Procédé selon la revendication 9 pour la fixation d'aimants permanents (1) selon la revendication 1 sur des supports magnétiques (8) au moyen d'organes de retenue (2) selon l'une des revendications 1-8, caractérisé en ce qu'après la fixation des aimants permanents (1) au moyen des organes de retenue (2), un enroulement des pôles (7) est posé et celui-ci est recouvert ensuite par des couvercles (4) et des baguettes (5).
